# EUROPÄISCHE PATENTSCHRIFT

(11) **EP 0 794 368 B1**
(45) Veröffentlichungstag und Bekanntmachung des Hinweises auf die Patenterteilung: **29.08.2001**
(21) Anmeldenummer: 96103356.0
(22) Anmeldetag: 05.03.1996
(51) Int. Cl.: F16J 15/34

(54) **Gleit- und/oder Gegenring**
Slip and/or support ring
Bague et/ou contre-bague

(43) Veröffentlichungstag der Anmeldung: 10.09.1997
(73) Patentinhaber: Federal-Mogul Burscheid GmbH, 51399 Burscheid (DE)
(72) Erfinder: Zutz, Hans-Henning, Ing., 42929 Wermelskirchen (DE)

(56) Entgegenhaltungen:
- GB-A- 2 070 702
- GB-A- 2 143 911
- PATENT ABSTRACTS OF JAPAN vol. 14, no. 295 (M-0990), 26.Juni 1990 & JP-A-02 093172 (KOMATSU), 3.April 1990,

## Beschreibung

Die Erfindung betrifft einen Gleit- und/oder Gegenring insbesondere einer Laufwerkdichtung, mit wenigstens einer, zur Aufnahme eines elastischen Rollkörpers bestimmten kegeligen Umfangsfläche, an deren der Dichtfläche abgewandten axialem Ende ein aus einem separaten Körper bestehender Anschlag zum axialen Halten des Rollkörpers angeordnet ist, wobei der Anschlag eine Umfangsfläche aufweist, die kantenfrei in die kegelige Umfangsfläche ausläuft.

Öl- und fettgeschmierte Lagerungen werden dauerhaft gegen verschmutzte Flüssigkeiten und abrasive Stoffe durch hochverschleißfeste Gleitringdichtungen aus Hartguß, gehärteten Schmiedestählen oder aus gezogenen und gehärteten Blechen geschützt. Diese Gleitringdichtungen bestehen in der Regel aus zwei geometrisch gleichen Gleitringen. Die erforderliche axiale Dichtflächenpressung erfolgt durch Stauchung entsprechend geformter Elastomerteile. Damit bei Transport und Lagerung die Elastomerteile auf den Gleitringen gehalten werden sowie bei der Montage ein Einknüpfeffekt erreicht und dadurch bedingt eine senkrechte Lage zur Mittenachse ermöglich wird, weisen die Gleitringe am axialen Endbereich einen Anschlag auf. Die Anschläge können auf unterschiedliche Weise hergestellt werden, wie beispielsweise durch spanabhebende Bearbeitung, wie Drehen, Schleifen oder auch durch Anschmieden oder durch Stauchen. Bei Gleitringdichtungen aus Guß können die Anschläge mit angegossen werden.
Diese Art der Herstellung erweist sich in der Praxis als äußerst teuer, deshalb wurden auch schon Anschläge als separate Körper hergestellt und anschließend mit dem Gleitoder Gegenring verbunden. Das deutsche Gebrauchsmuster 79 24 588 offenbart einen Gleit- oder Gegenring mit separatem Anschlag. Die Anordnung eines Anschlages auf die kegelige Umfangsfläche erwies sich jedoch als nicht ausreichend praktikabel. Als Grund hierfür sind die bei Gußteilen relativ breiten Toleranzfelder anzusehen. Damit der Anschlag ausreichend fest mit dem Gleit- oder Gegenring verbindbar ist, muß die Sitzfläche des Anschlages zusätzlich durch spanabhebende Verfahren bearbeitet werden. Überdies entstehen bei Anschlägen auf der Umfangsfläche im Übergangsbereich zwischen Anschlag und Umfangsfläche Kanten, die die Rollkörper beschädigen können.

Die JP-A- 2093172 offenbart eine Gleitringdichtung bestehend aus vier einzelnen Bauteilen aus Sintermaterialien. Alle Bauteile werden separat hergestellt und anschließend miteinander verbunden. Ein Anschlag aus Kunststoff ist nicht offenbart.

Der Erfindung liegt die Aufgabe zugrunde, einen gattungsgemäßen Gleit- und Gegenring auf besonders einfache Art und Weise mit einem separaten Anschlag für den Rollkörper zu versehen, ohne daß der Gleit- und/oder Gegenring kostenintensiv vorbearbeitet werden muß , ohne g von Gußtoleranzen abhängig zu sein.

Diese Aufgabe wird erfindungsgemäß durch die kennzeichnenden Merkmale des Patentanspruch 1 gelöst.
Auf diese Weise können keine schädlichen Kanten im Übergangsbereich entstehen. Vorteilhafte Ausgestaltungen der Erfindung ergeben sich aus den Unteransprüchen.

Aufgrund dieser Maßnahmen ist es nunmehr möglich einen im Sandgußverfahren hergestellten und ein großes Toleranzfeld aufweisenden Gleit- und/oder Gegenring mit dem Anschlag zu verbinden, ohne daß die Innenumfangsfläche spanend bearbeitet werden muß. Der Anschlag wird einfach in den Gleit- oder Gegenring eingepreßt und einem zweiten Gedanken der Erfindung gemäß formschlüssig mit dem Gleit- oder Gegenring verbunden. Hierzu kann im Endbereich der Hülse eine Hinterschneidung angeordnet sein. Denkbar ist natürlich auch eine andere Verbindung , beispielsweise eine kraftschlüssige Verbindung, in der die Verbindung als Preßsitz ausgebildet wird.

Kunststoff bettet sich aufgrund seiner speziellen Fließeigenschaft bei entsprechender Druckbelastung und Oberflächengestaltung beider Fügeteile in die Oberflächenstruktur des Gußteiles ein, wodurch eine ausreichende Haftfestigkeit gegeben ist. Alternativ besteht die Möglichkeit, das Kunststoffmaterial in die vorgegebenen Ausnehmungen des Gleit- und/oder Gegenringes einzuspritzen. Dieses Herstellungsverfahren ist weitestgehend unabhängig von den Toleranzen des Gußkörpers. Da beim Einspritzen keine Haftkräfte aus dimensionaler Überdeckung entstehen, können unter Umständen die Teile sich voneinander lösen. Hierfür im besonderen ist es von Vorteil, wenn ein Kunststoff auf Basis Polyvinyl-Acetat oder Polyvinyl-Alkohol Verwendung findet. Diese Werkstoffe lösen sich bei entsprechenden Temperaturen oder Kontakt mit den abzudichtenden Medien ohne schädigende Rückstände auf. Da der Anschlag nur für den Zeitraum bis nach erfolgter Montage der Gleit- und Gegenringe benötigt wird, beeinträchtigt das Verschwinden nicht die Funktionssicherheit des Systems.

Die Erfindung ist in der Zeichnung dargestellt und wird im folgenden näher erläutert.

Es zeigen:
- Figur 1: erfindungsgemäßer Gleit- oder Gegenring
- Figur 2: eine alternative Ausgestaltung gemäß Figur 1
- Figur 3: eine Ausgestaltung mit segmentförmigen Profilkörpern

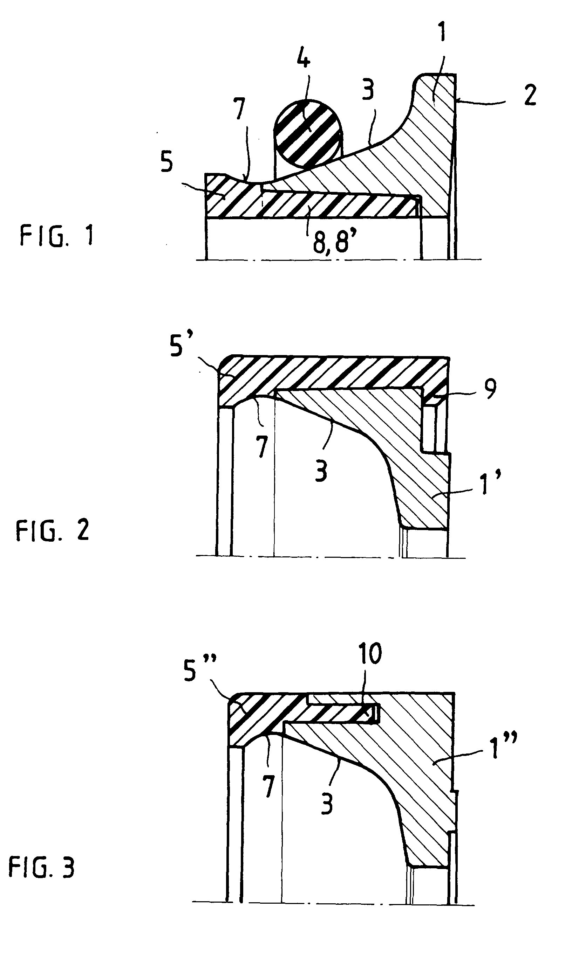

In den Figuren 1 bis 3 sind Gleit- oder Gegenringe einer nicht weiter dargestellten Laufwerkdichtung dargestellt. Da Gleit- und Gegenring gleiche geometrische Konturen aufweisen können, wird im folgenden nur der Gleitring angesprochen. Der in der Figur 1 dargestellte Gleitring (1) weist an seiner der Dichtfläche (2) abgewandten Seite eine kegelige Umfangsfläche (3) zur Aufnahme eines elastischen Rollkörpers (4) auf. Der Gleitring (1) ist aus einem hochwertigen, verschleißfesten Werkstoff im Gußverfahren hergestellt. Am Endbereich der Umfangsfläche (3) ist ein Anschlag (5) mit einer konvex verlaufenden Aussenum fangsfläche (7) angeordnet. Der Anschlag (5) ist erfindungsgemäß so angeordnet, daß die Aussenumfangsfläche (7) kantenfrei in die kegelige Umfangsfläche (3) ausläuft. Der Anschlag (5) weist mehrere axial gerichtete Schenkel (8) auf, welche am Innenumfang des Gleitringes (1) gehalten sind. Die Halterung kann auch als zylindrische Hülse (8') ausgebildet sein. Der Anschlag (5) ist aus Kunststoff hergestellt. Der Aussendurchmesser der Hülse (8') ist geringfügig größer als das obere Toleranzmaß des Innendurchmessers des Gleitringes (1) ausgebildet. Diese Art der Befestigung hat den Vorteil, daß der aus hochfestem Werkstoff gebildete Gleitring (1) nach dem Gußvorgang nicht mehr bearbeitet werden muß, um eine feste Verbindung zwischen Anschlag (5') und Gleitring (1) zu erzeugen. Der Kunststoff bettet sich aufgrund seiner speziellen Fließeigenschaften bei entsprechender spezifischer Druckbelastung in die Oberflächenstruktur des Gußteiles ein. Für die Erfindung ist es unbedeutend, ob die Anschläge (5,5') am Innendurchmesser gemäß Fig. 1 oder am Aussendurchmesser des Gleitringes (1,1') gemäß Fig. (2) angeordnet sind. Die Fig. (3) zeigt einen Anschlag (5") als segmentförmigen Profilkörper am axialen Endbereich der Umfangsfläche (3), diese Konstruktion stellt keine Ausführunsbeispiel der Erfindung dar.

## Patentansprüche

1. Gleit- und/oder Gegenring, insbesondere einer Laufwerkdichtung, mit wenigstens einer, zur Aufnahme eines elastischen Rollkörpers (4) bestimmten kegeligen Umfangsfläche (3), an deren, der Dichtfläche (2) abgewandtem axialem Ende ein aus einem separatem Körper bestehender Anschlag (5,5') zum axialen Halten des Rollkörpers (4) angeordnet ist, wobei der Anschlag (5,5') eine Umfangsfläche (7) aufweist, die kantenfrei in die kegelige Umfangsfläche (3) ausläuft, **dadurch gekennzeichnet**, daß der Gleit- und oder Gegenring (1,1') aus einem verschleißfesten Gußwerkstoff und der Anschlag (5,5') aus Kunststoff besteht und axial gerichtete Schenkel (8) aufweist, die in oder auf den Gleitund/oder Gegenring (1,1') axial einschiebbar sind ohne daß der Gleitund/oder Gegenring (1,1') nach dem Gußvorgang bearbeitet werden muß um eine feste Verbindung zu erzeugen.

2. Gleit-und/oder Gegenring nach Anspruch 1, **dadurch gekennzeichnet**, daß die Umfangsfläche (7) des Anschlags (5,5') konvex gekrümmt ist.

3. Gleit- und/oder Gegenring nach Anspruch 1 und 2, **dadurch gekennzeichnet**, daß die Schenkel (8) als zylindrische Hülse (8') ausgebildet sind.

4. Gleit- und/oder Gegenring nach Anspruch 3, **dadurch gekennzeichnet**, daß die Hülse (8') formschlüssig mit dem Gleit- und/oder Gegenring (1,1') verbunden ist.

5. Gleit- und/oder Gegenring nach Anspruch 4, **dadurch gekennzeichnet**, daß der Endbereich der Hülse (8') eine Hinterschneidung (9) aufweist.

6. Gleit- und/oder Gegenring nach Anspruch 3, **dadurch gekennzeichnet**, daß die Hülse (8') kranschlüssig mit dem Gleit- und/oder Gegenring (1,1') verbunden ist.

7. Gleit- und/oder Gegenring nach Anspruch 6, **dadurch gekennzeichnet**, daß die Hülse (8') mit dem Gleit- und/oder Gegenring (1,1')durch Preßsitz verbunden ist.

8. Gleit- und /oder Gegenring nach Anspruch 1, **dadurch gekennzeichnet**, daß der Kunststoff auf Basis Polyvinyl-Acetat oder Polyvinyl-Alkohol gebildet ist.

## Claims

1. Slip and/or support ring, especially of a drive seal, said ring having at least one tapered peripheral surface (3) intended to receive a resilient rolling body (4) and on the axial end of which, remote from the sealing surface (2), there is disposed a limit stop (5, 5') consisting of a separate body to hold the rolling body (4) in an axial direction, the stop (5, 5') having a peripheral surface (7) which ends, free of edges, in the tapered peripheral surface (3) **characterised in that** the slip and/or support ring (1, 1') consists of a wear-resistant casting material and the stop (5, 5') of plastics material and has axially oriented members (8) which can be pushed axially into or onto the slip and/or support ring (1, 1') without the slip and/or support ring (1, 1) having to be machined after the casting process to produce a secure connection.

2. Slip and/or support ring according to claim 1, **characterised in that** the peripheral surface (7) of the stop (5, 5') has a convex curvature.

3. Slip and/or support ring according to claim 1 and 2, **characterised in that** the members (8) are configured as a cylindrical sleeve (8').

4. Slip and/or support ring according to claim 3, **characterised in that** the sleeve (8') is connected to the slip and/or support ring (1, 1') as a form-fit.

5. Slip and/or support ring according to claim 4, **characterised in that** the end region of the sleeve (8') has an undercut (9).

6. Slip and/or support ring according to claim 3, **characterised in that** the sleeve (8') is connected to the slip and/or support ring (1, 1') in a non-positive manner.

7. Slip and/or support ring according to claim 6, **characterised in that** the sleeve (8') is connected to the slip and/or support ring as a press fit.

8. Slip and/or support ring according to claim 1, **characterised in that** the plastics material is formed on a base of polyvinyl acetate or polyvinyl alcohol.

## Revendications

1. Anneau de glissement et/ou contre-anneau, en particulier d'une étanchéité de mécanisme de roulement, comprenant au moins une surface périphérique conique adaptée à la réception d'un corps de roulement élastique (4), une butée (5, 5') constituée d'un corps séparé est disposée à l'extrémité axiale de la surface périphérique (3) opposée à la surface d'étanchéité (2) pour un maintien axial du corps de roulement (4), la butée (5, 5') comprenant une surface périphérique (7), qui se prolonge de manière continue sans arêtes dans la surface périphérique conique (3), **caractérisé en ce que** l'anneau de glissement et/ou contre-anneau (1, 1') est constitué d'un matériau de moulage résistant à l'usure et la butée (5, 5') est constituée en matière plastique et comprend des brides (8) dirigées axialement, qui peuvent être insérées axialement dans ou sur l'anneau de glissement et/ou contre-anneau (1, 1') sans que l'anneau de glissement et/ou contre-anneau (1, 1') n'ait besoin d'être usiné après le processus de moulage afin d'obtenir une liaison résistante.

2. Anneau de glissement et/ou contre-anneau selon la revendication 1, **caractérisé en ce que** la surface périphérique (7) de la butée (5, 5') est courbée de manière convexe.

3. Anneau de glissement et/ou contre-anneau selon les revendications 1 et 2, **caractérisé en ce que** les brides (8) sont réalisées sous la forme d'une douille cylindrique (8').

4. Anneau de glissement et/ou contre-anneau selon la revendication 3, **caractérisé en ce que** la douille (8') est reliée de manière adaptée en forme avec l'anneau de glissement et/ou contre-anneau (1, 1').

5. Anneau de glissement et/ou contre-anneau selon la revendication 4, **caractérisé en ce que** la zone d'extrémité de la douille (8') comprend une contre-dépouille (9).

6. Anneau de glissement et/ou contre-anneau selon la revendication 3, **caractérisé en ce que** la douille (8') est reliée en force avec l'anneau de glissement et/ou contre-anneau (1, 1').

7. Anneau de glissement et/ou contre-anneau selon la revendication 6, **caractérisé en ce que** la douille (8') est reliée à l'anneau de glissement et/ou contre-anneau (1, 1') avec un ajustement serré.

8. Anneau de glissement et/ou contre-anneau selon la revendication 1, **caractérisé en ce que** le matériau plastique est réalisé à partir d'acétate de polyvinyle ou d'alcool de polyvinyle.
